# EUROPEAN PATENT SPECIFICATION

(11) **EP 3 838 618 B1**
(45) Date of publication and mention of the grant of the patent: **07.06.2023**
(21) Application number: 20214439.0
(22) Date of filing: 16.12.2020
(51) Int. Cl.: B60C 7/14, B60C 7/18, B60C 7/24, B60B 25/06, B60C 7/08

(54) **NON-PNEUMATIC TIRE AND WHEEL ASSEMBLY WITH INTEGRATED SPOKE STRUCTURE**
NICHT PNEUMATISCHER REIFEN UND RADANORDNUNG MIT INTEGRIERTER SPEICHENSTRUKTUR
PNEU NON PNEUMATIQUE ET ENSEMBLE ROUE À STRUCTURE DE RAYON INTÉGRÉE

(30) Priority: 20.12.2019 US 201962951439 P; 18.11.2020 US 202016951099
(43) Date of publication of application: 23.06.2021
(73) Proprietor: The Goodyear Tire & Rubber Company, Akron, OH 44316 (US)
(72) Inventor: KANDEL, Kurtis Dale, Louisville, OH 44641 (US); LOSEY, Robert Allen, Kent, OH 44240 (US); KONTNEY, Steven Allan, Indianapolis, IN 46237 (US); MENDENHALL, Andrew Brent, Mooresville, IN 46158 (US)
(74) Representative: Kutsch, Bernd

(56) References cited:
- EP-A1- 3 263 361
- EP-A1- 3 275 696
- EP-A1- 3 486 078
- EP-A1- 3 785 932
- WO-A1-2015/052987
- CN-A- 110 293 796
- JP-A- 2009 269 410
- JP-A- 2009 269 413
- JP-A- 2018 095 068
- US-A1- 2019 152 256

## Description

### Field of the Invention

The present invention relates generally to vehicle tires and non-pneumatic tires, and more particularly, to a non-pneumatic tire.

### Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non pneumatic tire is desired that has all the features of the pneumatic tires without the drawback of the need for air inflation is desired.

Each of JP 2009/269410 A, US 2019/152256 A1, EP 3 486 078 A1 and EP 3 275 696 A1 describe an assembly in accordance with the preamble of claim 1.

### Summary of the Invention

The invention relates to a non-pneumatic tire and wheel assembly in accordance with claim 1.

Dependent claims refer to preferred embodiments of the invention.

The invention provides in a first aspect a non-pneumatic tire and wheel assembly comprising an outer annular ring having a ground contacting tread portion and a shear band, one or more spoke disks, wherein each spoke disk has an outer ring mounted to the shear band, and an inner ring mounted to the wheel, wherein each spoke disk has at least two spokes, wherein each of said spoke disks has one or more anchors for mounting in aligned mating slots of the wheel, wherein said one or more anchors further include a pin received in a recess.

### Brief Description of the Drawings

The present invention will be better understood through reference to the following description and the appended drawings, in which:
FIG. 1 is a perspective view of a first embodiment of a non-pneumatic tire and wheel assembly of the present invention;
FIG. 2 is a cross-sectional perspective view of the non-pneumatic tire and wheel assembly of FIG. 1;
FIG. 3 is an exploded view of non-pneumatic tire and wheel assembly of FIG. 1;
FIG. 4 is a perspective view of the wheel of the present invention;
FIG. 5 is a cross-sectional view of the wheel of the present invention;
FIG. 6 is a close-up front view of the spokes of the nonpneumatic tire and wheel of the present invention;
FIG. 7 is a front view of the wheel of the present invention;
FIG. 8 is a close-up view of the wheel slot and anchor of the present invention;

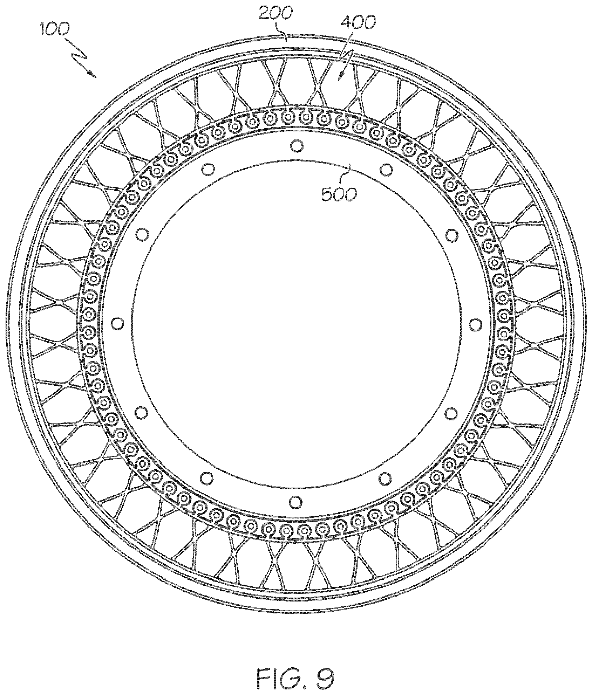

FIG. 9 is a front view of the wheel and spoke structure of the present invention;
FIG. 10 is a cross-sectional view of the wheel and spoke structure of FIG. 9;
FIG. 11 is a front view of a sector of the wheel and spoke structure of FIG. 9;
FIG. 12 is a close-up view of a portion of the wheel and spoke structure prior to pretensioning, while FIG. 13 illustrates the spokes of FIG. 12 after pretensioning; and
FIG. 14 illustrates a cross-sectional view of the tread band and shear band.

### Definitions

The following terms are defined as follows for this description.

"Equatorial Plane" means a plane perpendicular to the axis of rotation of the tire passing through the centerline of the tire.

"Meridian Plane" means a plane parallel to the axis of rotation of the tire and extending radially outward from said axis.

"Hysteresis" means the dynamic loss tangent measured at 10 percent dynamic shear strain and at 25°C.

### Detailed Description of Example Embodiments of the Invention

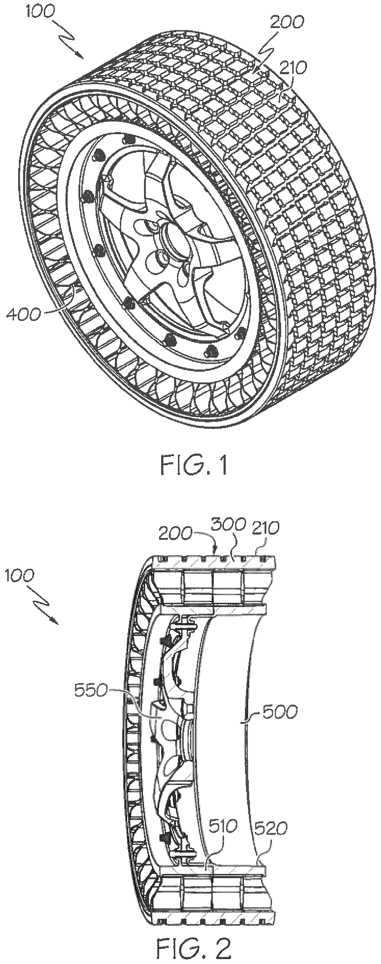

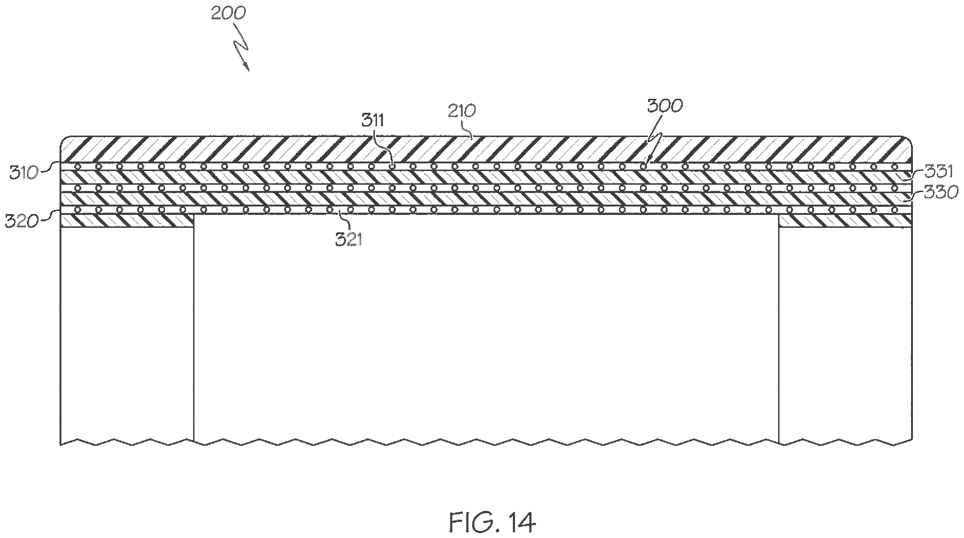

The non-pneumatic tire and wheel assembly 100 of the present invention is shown in Figures 1-3. The nonpneumatic tire of the present invention includes an outer annular band 200 surrounding one or more spoke disks 400 which are integrally mounted to a wheel 500. The outer annular band 200 includes a radially outer surface having a ground engaging tread 210. The tread 210 may be conventional in design, and include the various elements known to those skilled in the art of tread design such as ribs, blocks, lugs, grooves, and sipes as desired to improve the performance of the tire in various conditions. As shown in Figure 14, a shear band 300 is located radially inward of the tread and allows the non-pneumatic tire of the present invention to be a top loaded structure, so that the shear band 300 and the spoke disks efficiently carry the load. The shear band 300 together with the spoke disks 400 are designed so that the stiffness of the spoke disks 400 is directly related to the spring rate of the tire. The spoke disks 400 are designed to be structures that buckle or deform in the tire footprint yet are unable to carry a compressive load. This allows the rest of the spokes not in the footprint area the ability to carry the load. It is desired to minimize this compressive load on the spokes for the reasons set forth above and to allow the shear band to bend to overcome road obstacles. The approximate load distribution is such that approximately 90-100% of the load is carried by the shear band and the upper spokes, so that the lower spokes carry virtually zero of the load and preferably less than 10%.

The shear band 300 is preferably annular, and is shown in cross-section in Figure 14, and is preferably located radially inward of the tire tread 210. The shear band 300 preferably includes a first and second reinforced elastomer layer 310, 320 separated by a shear matrix 330, 331 of elastomer. Each inextensible layer 31 0, 320 may be formed of parallel inextensible reinforcement cords 311, 321 embedded in an elastomeric coating. The reinforcement cords 311, 321 may be steel, aramid, or other inextensible structure. In the first reinforced elastomer layer 310, the reinforcement cords 311 are oriented at an angle Φ in the range of from 0 to +/-10 degrees relative to the tire equatorial plane. In the second reinforced elastomer layer 320, the reinforcement cords 321 are oriented at an angle ϕ in the range of from 0 to +/- 10 degrees relative to the tire equatorial plane. Preferably, the angle Φ of the first layer is in the opposite direction of the angle ϕ of the reinforcement cords in the second layer. That is, an angle + Φ in the first reinforced elastomeric layer and an angle - ϕ in the second reinforced elastomeric layer.

The shear matrix 330 preferably has a thickness in the range of from 2.54 mm to 5.08 mm, more preferably about 3.8 mm. The shear matrix is preferably formed of an elastomer material having a shear modulus G in the range of from 2.5 to 40 MPa, and more preferably in the range of 20 to 40 MPA. The shear band has a shear stiffness GA and a bending stiffness El. It is desirable to maximize the bending stiffness of the shearband El and minimize the shear band stiffness GA. The acceptable ratio of GA/EI would be between 0.01 and 20, with an ideal range between 0.01 and 5. EA is the extensible stiffness of the shear band, and it is determined experimentally by applying a tensile force and measuring the change in length.

The ratio of the EA to EI of the shear band is acceptable in the range of 0.02 to 100 with an ideal range of 1 to 50.

In an alternative embodiment, the shear band may comprise any structure which has the above described ratios of GA/EI and EA/EI. The tire tread is preferably wrapped about the shear band and is preferably integrally molded to the shear band.

### SPOKE DISK AND WHEEL

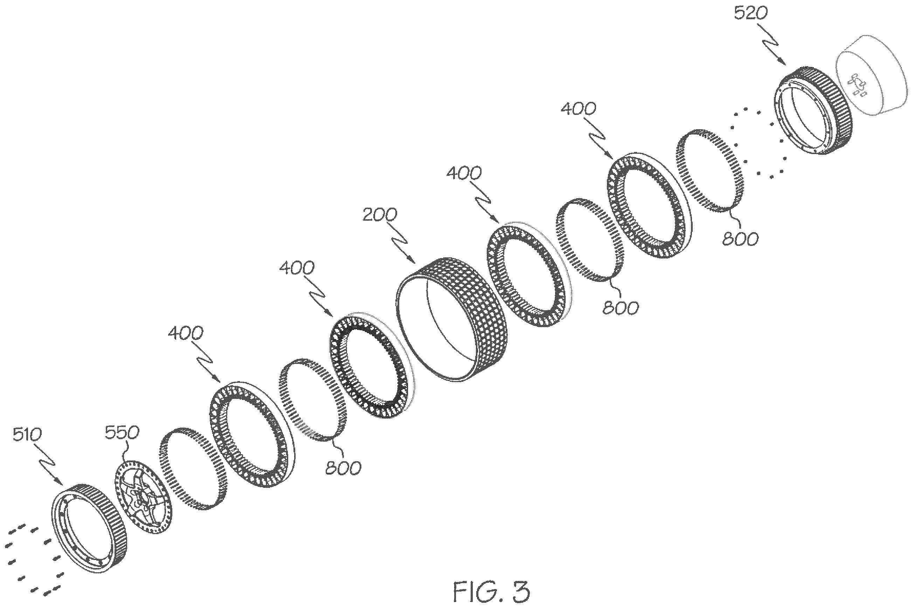

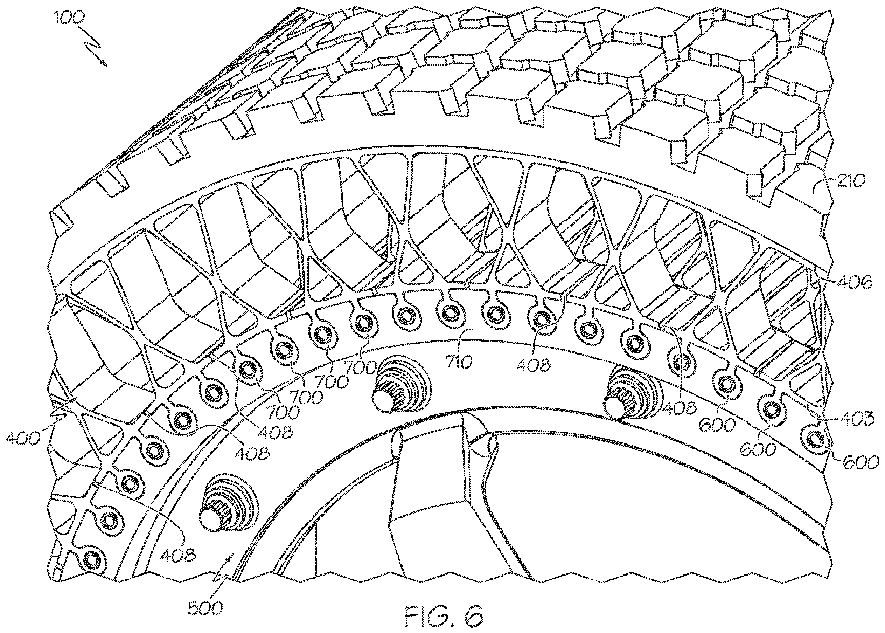

The non-pneumatic tire of the present invention further includes at least one spoke disk 400, and preferably at least two disks which may be spaced apart at opposed ends of the non-pneumatic tire. In the tire and wheel assembly shown in Figures 1-3, there are four spoke disks mounted upon wheel 500. The spoke disk functions to carry the load transmitted from the shear layer. The disks are primarily loaded in tension and shear and carry no load in compression. A first exemplary spoke disk 400 is shown in Figures 3 and Figure 6. The disk 400 is annular and has an outer annular ring 406 and a radially inner annular ring 403. Each spoke disk 400 may be optionally divided into two or more sectors for ease of assembly.

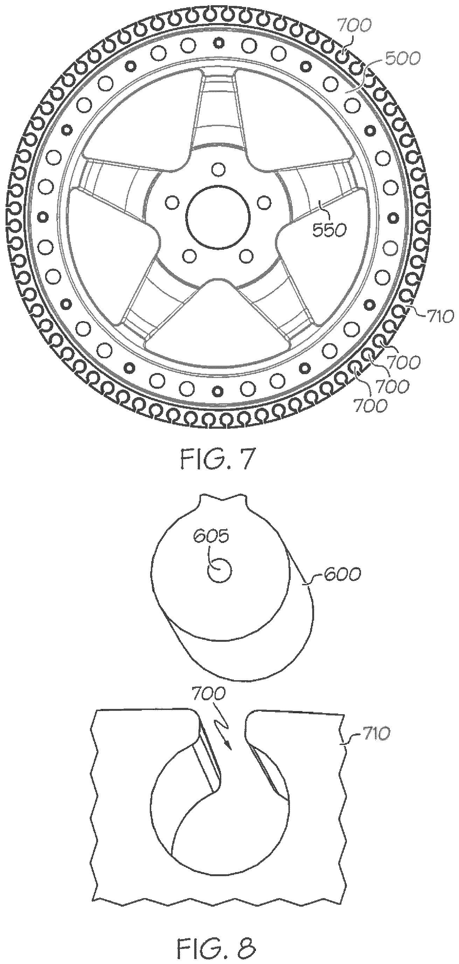

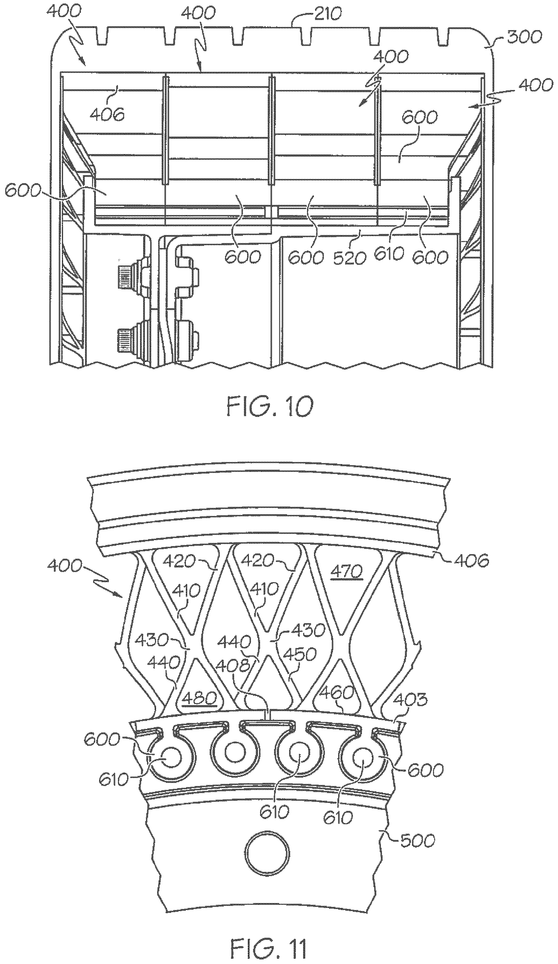

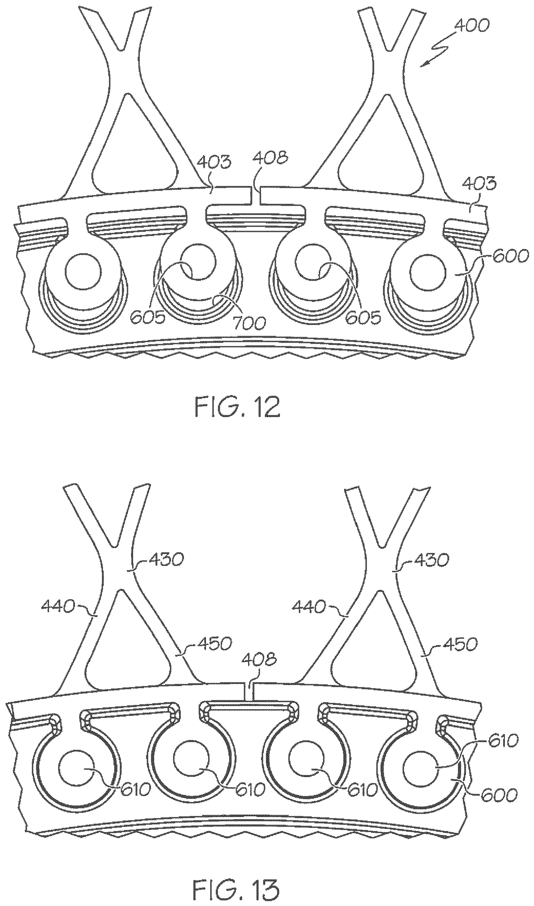

As shown in Figure 11, the spoke disk 400 is formed of a plurality of spoke members 410, 420, 440, 450 that are joined together at a junction 430 to form upper and lower triangles 470, 480. The upper triangle 470 has sides formed by spoke members 410, 420 and outer annular ring 406. The lower triangle 480 has sides formed by spoke members 440,450 and inner annular ring 460. As shown in Figures 8, 11, 12 and 13, each spoke disk 400 has a plurality of anchors 600 which extend radially inward of the inner annular ring 403. Each anchor 600 is preferably round or elliptical in shape, although any desired shape will work. Each anchor is received in a complementary shaped slot 700 located on an outer annular ring 710 of wheel 500. Each anchor snugly fits into each slot 700 for mating reception. Each anchor is stretched to be received within slots 700 as shown in Figure 13, which results in pretensioning of the spokes. The inner annular ring 403 of the spoke disk preferably includes an optional gap 408 located between the anchors.

One or more of the anchors 600 further include an interior recess 610 that extends across the anchor in the tire's axial direction. The interior recess 605 includes a pin 610 that is secured within the interior recess 605 after the anchors are received in the complementary shaped slot 700. The pins 610 prevent pullout of the anchors from the complementary shaped mating slots. The pins 610 may be annular.

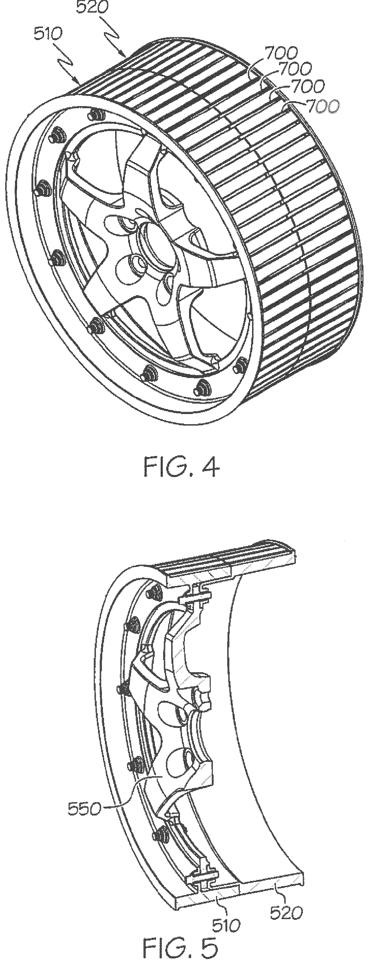

The wheel 500 is shown in Figures 4-6. The wheel 500 is preferably split into two halves 510, 520 as shown in Figure 6. Each wheel rim half may be injection molded and then assembled together with fasteners, as shown in Figure 6. The wheel 500 further includes a stamped metal center plate 550 which may be bolted to a vehicle hub motor. The wheel 500 further includes the slots 700 as described above. The anchors 600 of each of the spoke disks are slid into the aligned slots 700 in order to mount the spoke disks to the wheel 500. The wheel may optionally further include retaining rings located on each end of the wheel in order to keep the spoke disks from sliding off the wheel.

Each spoke disk 400 as described herein preferably has an axial thickness A that is substantially less than the axial thickness AW of the non-pneumatic tire. The axial thickness A is in the range of 5-40% of AW, more preferably 15-30% AW. If more than one disk is utilized, than the axial thickness of each disk may vary or be the same.

Each spoke disk has a spring rate SR which may be determined experimentally by measuring the deflection under a known load. One method for determining the spoke disk spring rate k is to mount the spoke disk to a hub and attaching the outer ring of the spoke disk to a rigid test fixture. A downward force is applied to the hub, and the displacement of the hub is recorded. The spring rate k is determined from the slope of the force deflection curve. It is preferred that the spoke disk spring rate be greater than the spring rate of the shear band. It is preferred that the spoke disk spring rate be in the range of 4 to 12 times greater than the spring rate of the shear band, and more preferably in the range of 6 to 10 times greater than the spring rate of the shear band.

Preferably, if more than one spoke disk is used, all of the spoke disks have the same spring rate. The spring rate of the non-pneumatic tire may be adjusted by increasing the number of spoke disks. Alternatively, the spring rate of each spoke disk may be different by varying the geometry of the spoke disk or changing the material. It is additionally preferred that if more than one spoke disk is used, that all of the spoke disks have the same outer diameter.

The spoke disks are preferably formed of an elastic material, more preferably, a thermoplastic elastomer. The material of the spoke disks is selected based upon one or more of the following material properties. The tensile (Young's) modulus of the disk material is preferably in the range of 45 MPa to 650 MPa, and more preferably in the range of 85 MPa to 300 MPa, using the ISO 527-1/-2 standard test method. The glass transition temperature is less than -25 degree Celsius, and more preferably less than -35 degree Celsius. The yield strain at break is more than 30%, and more preferably more than 40%. The elongation at break is more than or equal to the yield strain, and more preferably, more than 200%. The heat deflection temperature is more than 40 degree C under 0.45 MPa, and more preferably more than 50 degree C under 0.45 MPa. No break result for the Izod and Charpy notched test at 23 degree C using the ISO 179/ISO180 test method. Two suitable materials for the disk are commercially available by DSM Products and sold under the trade name ARNITEL PM581 and ARNITEL PL461.

## Claims

1. A non-pneumatic tire and wheel assembly (100) comprising an outer annular ring (200) having tread portion (210) for ground contact and a shear band (300), and one or more spoke disks (400), wherein each spoke disk (400) has an outer ring (406) mounted to the shear band (300) and an inner ring (403) mounted to a wheel (500), wherein each spoke disk (400) has at least two spokes (410, 420, 440, 450), and wherein each of said spoke disks (400) has one or more anchors (600) for mounting in aligned mating slots (700) of the wheel (500), **characterized in that** said one or more anchors (600) further include a pin (610) received in a recess (605).

2. The non-pneumatic tire and wheel assembly of claim 1 wherein each spoke (410, 420, 440, 450) extends between the outer ring (406) and the inner ring (403).

3. The non-pneumatic tire and wheel assembly of claim 1 or 2 wherein said one or more anchors (600) extend radially inward of the inner ring (403).

4. The non-pneumatic tire and wheel assembly of claim 1 wherein the pin (610) extends in the axial direction and/or wherein the pin (610) extends the axial width of the spoke disk (400).

5. The non-pneumatic tire and wheel assembly of at least one of the previous claims wherein the anchor (600) has a round shaped inner portion and/or wherein the anchor (600) has an inner neck.

6. The non-pneumatic tire and wheel assembly of at least one of the previous claims wherein the spoke disk (400) has an axial thickness less than the axial thickness of the tire.

7. The non-pneumatic tire and wheel assembly of at least one of the previous claims wherein a first spoke and a second spoke of said spokes are joined together at a junction (430).

8. The non-pneumatic tire and wheel assembly of at least one of the previous claims wherein a first spoke and a second spoke of said spokes are joined together to form a first triangle (470) and a second triangle (480).

9. The non-pneumatic tire and wheel assembly of at least one of the previous claims wherein the inner ring (403) of the spoke disk (400) has one or more gaps (408).

10. The non-pneumatic tire and wheel assembly of at least one of the previous claims wherein the wheel (500) is formed of a first half wheel and a second half wheel (510, 520).

11. The non-pneumatic tire and wheel assembly of at least one of the previous claims wherein the mating slots (700) of the wheel (500) extend in the axial direction.

12. The non-pneumatic tire and wheel assembly of at least one of the previous claims wherein said one or more anchors (600) have a round shape, an obround shape or an elliptical shape.

## Patentansprüche

1. Nicht-pneumatische Reifen- und Radbaugruppe (100), die einen äußeren kreisförmigen Ring (200), der einen zum Bodenkontakt geeigneten Laufflächenabschnitt (210) hat, und ein Scherband (300), sowie eine oder mehrere Speichenscheiben (400) umfasst, wobei jede Speichenscheibe (400) einen an dem Scherband (300) angebrachten Außenring (406) und einen an einem Rad (500) angebrachten Innenring (403) hat, wobei jede Speichenscheibe (400) mindestens zwei Speichen (410, 420, 440, 450) hat, und wobei jede der Speichenscheiben (400) einen oder mehrere Anker (600) hat, die zur Montage in ausgerichteten angepassten Schlitzen (700) des Rades (500) bestimmt sind, **dadurch gekennzeichnet dass** der eine oder die mehreren Anker (600) ferner einen in einer Aussparung (605) aufgenommenen Stift (610) enthalten.

2. Nicht-pneumatische Reifen- und Radbaugruppe nach Anspruch 1, wobei jede Speiche (410, 420, 440, 450) sich zwischen dem Außenring (406) und dem Innenring (403) erstreckt.

3. Nicht-pneumatische Reifen- und Radbaugruppe nach Anspruch 1 oder 2, wobei der eine oder die mehreren Anker (600) sich radial nach innen des Innenrings (403) erstrecken.

4. Nicht-pneumatische Reifen- und Radbaugruppe nach Anspruch 1, wobei der Stift (610) sich in der axialen Richtung erstreckt, und/oder wobei der Stift (610) die axiale Breite der Speichenscheibe (400) verlängert.

5. Nicht-pneumatische Reifen- und Radanordnung nach mindestens einem der vorhergehenden Ansprüche, wobei der Anker (600) einen runden geformten inneren Abschnitt hat, und/oder wobei der Anker (600) einen inneren Hals hat.

6. Nicht-pneumatische Reifen- und Radbaugruppe nach mindestens einem der vorhergehenden Ansprüche, wobei die Speichenscheibe (400) eine axiale Dicke aufweist, die kleiner als die axiale Dicke des Reifens ist.

7. Nicht-pneumatische Reifen- und Radanordnung nach mindestens einem der vorhergehenden Ansprüche, wobei eine erste Speiche und eine zweite Speiche dieser Speichen an einer Verbindungsstelle (430) miteinander verbunden sind.

8. Nicht-pneumatische Reifen- und Radanordnung nach mindestens einem der vorhergehenden Ansprüche, wobei eine erste Speiche und eine zweite Speiche dieser Speichen miteinander verbunden sind, um ein erstes Dreieck (470) und ein zweites Dreieck (480) zu formen.

9. Nicht-pneumatische Reifen- und Radanordnung nach mindestens einem der vorhergehenden Ansprüche, wobei der Innenring (403) der Speichenscheibe (400) eine oder mehrere Lücken (408) hat.

10. Nicht-pneumatische Reifen- und Radbaugruppe nach mindestens einem der vorhergehenden Ansprüche, wobei das Rad (500) aus einer ersten Hälfte eines Rades und einerzweiten Hälfte eines Rades (510, 520) gebildet ist.

11. Nicht-pneumatische Reifen- und Radbaugruppe nach mindestens einem der vorhergehenden Ansprüche, wobei die angepassten Schlitze (700) des Rades (500) sich in der axialen Richtung erstrecken.

12. Nicht-pneumatische Reifen- und Radbaugruppe nach mindestens einem der vorhergehenden Ansprüche, wobei der eine oder die mehreren Anker (600) eine runde Form, eine gewölbte Form oder eine elliptische Form haben.

## Revendications

1. Assemblage d'une roue et d'un bandage non pneumatique (100) qui comprend un anneau circulaire externe (200) possédant une portion (210) faisant office de bande de roulement pour une mise en contact avec le sol et une bande de cisaillement (300), de même qu'un ou plusieurs disques à rayons (400) ; dans lequel chaque disque à rayons (400) possède un anneau externe (406) monté sur la bande de cisaillement (300) et un anneau interne (403) monté sur une roue (500) ; dans lequel chaque disque à rayons (400) possède au moins deux rayons (410, 420, 440, 450) ; et dans lequel chacun desdits disques à rayons (400) possède plusieurs points d'ancrage (600) à des fins de montage dans des fentes correspondantes alignées (700) de la roue (500), **caractérisé en ce que** lesdits un ou plusieurs points d'ancrage (600) englobent en outre une cheville (610) logée dans un évidement (605).

2. Assemblage d'une roue et d'un bandage non pneumatique revendication 1, dans lequel chaque rayon (410, 420, 440, 450) s'étend entre l'anneau externe (106) et l'anneau interne (403).

3. Assemblage d'une roue et d'un bandage non pneumatique revendication 1 ou 2, dans lequel lesdits un ou plusieurs points d'ancrage (600) s'étendent, en direction radiale, à l'intérieur de l'anneau interne (403).

4. Assemblage d'une roue et d'un bandage non pneumatique revendication 1, dans lequel la cheville (610) s'étend dans la direction axiale et/ou dans lequel la cheville (610) s'étend sur la largeur axiale du disque à rayons (400).

5. Assemblage d'une roue et d'un bandage non pneumatique selon au moins une des revendications précédentes, dans lequel le point d'ancrage (600) possède une portion interne de forme arrondie et/ou dans lequel le point d'ancrage 600) possède un rétrécissement interne.

6. Assemblage d'une roue et d'un bandage non pneumatique selon au moins une des revendications précédentes, dans lequel le disque à rayons (400) possède une épaisseur axiale inférieure à l'épaisseur axiale du bandage.

7. Assemblage d'une roue et d'un bandage non pneumatique selon au moins une des revendications précédentes, dans lequel un premier rayon et un deuxième rayon parmi les rayons en question sont joints l'un à l'autre à une jonction (430).

8. Assemblage d'une roue et d'un bandage non pneumatique selon au moins une des revendications précédentes, dans lequel un premier rayon et un deuxième rayon parmi les rayons en question sont joints l'un à l'autre pour former un premier triangle (470) et un deuxième triangle (480).

9. Assemblage d'une roue et d'un bandage non pneumatique selon au moins une des revendications précédentes, dans lequel l'anneau interne (403) du disque à rayons (400) possède un ou plusieurs espaces libres (408).

10. Assemblage d'une roue et d'un bandage non pneumatique selon au moins une des revendications précédentes, dans lequel la roue (500) est réalisée à partir d'une première moitié de roue et d'une deuxième moitié de roue (510, 520).

11. Assemblage d'une roue et d'un bandage non pneumatique selon au moins une des revendications précédentes, dans lequel les fentes correspondantes (700) de la roue (500) s'étendent dans la direction axiale.

12. Assemblage d'une roue et d'un bandage non pneumatique selon au moins une des revendications précédentes, dans lequel lesdits un ou plusieurs points d'ancrage (600) possèdent une configuration de forme arrondie, une configuration de forme oblongue ou une configuration de forme elliptique.
